# FASCICULE DE BREVET EUROPEEN

(11) **EP 3 899 993 B1**
(45) Date de publication et mention de la délivrance du brevet: **04.01.2023**
(21) Numéro de dépôt: 19827731.1
(22) Date de dépôt: 19.12.2019
(51) Int. Cl.: H01F 17/00, H01Q 1/04, F16L 11/08, H01Q 1/22, G01N 27/24, H01Q 7/00

(54) **CONDUITE FLEXIBLE INCLUANT UN SYSTEME DE DETECTION D'UNE EVOLUTION D'UN PARAMETRE ENVIRONNEMENTAL**
FLEXIBLE LEITUNG MIT EINEM SYSTEM ZUR ERFASSUNG EINER ENTWICKLUNG EINES UMGEBUNGSPARAMETERS
FLEXIBLE CONDUIT INCLUDING A SYSTEM FOR DETECTING AN EVOLUTION OF AN ENVIRONMENTAL PARAMETER

(30) Priorité: 21.12.2018 FR 1874057
(43) Date de publication de la demande: 27.10.2021
(73) Titulaire: TECHNIP N-POWER, 92400 Courbevoie (FR)
(72) Inventeur: NICOLAS, Yann, 92500 RUEIL-MALMAISON (FR); THOMAS, Thierry, 38054 GRENOBLE Cedex 09 (FR)
(74) Mandataire: INNOV-GROUP
(86) Numéro de dépôt international: PCT/EP2019/086478
(87) Numéro de publication internationale: WO 2020/127844

(56) Documents cités:
- EP-A1- 0 025 344
- FR-A1- 3 062 211
- GB-A- 2 549 611
- US-A1- 2013 271 343

## Description

L'invention concerne les systèmes de détection à distance d'un changement dans l'état d'une conduite flexible dû à son environnement ou dans l'environnement proche de la conduite, en particulier à l'aide de circuits résonants. L'invention concerne notamment les conduites flexibles d'exploitation pétrolière offshore destinées à être immergées et/ou à transporter des hydrocarbures ou des fluides corrosifs.

Pour des conduites flexibles de transport de fluide, il est important de pouvoir détecter un changement d'état de l'environnement. En particulier pour des raisons de sécurité, il peut être important de détecter l'apparition d'un polluant dans un environnement industriel ou encore de détecter la présence de liquide dans un milieu supposé étanche à l'intérieur de la paroi de la conduite. En particulier, pour des conduites flexibles d'exploitation pétrolière utilisées en mer, il peut s'avérer primordial de détecter l'apparition d'eau dans des zones supposées étanches. En effet, l'apparition d'eau indésirable dans la paroi d'une conduite flexible peut occasionner des phénomènes de corrosion des couches métalliques de renfort de la conduite s'accompagnant par la suite d'une dégradation accélérée de la conduite.

Le document US6025725 décrit un système de détection comprenant un dispositif de lecture et un module de détection. Le dispositif de lecture inclut un enroulement d'antenne d'interrogation. Le dispositif de détection est un circuit résonant passif de type LC. Le dispositif de lecture est lié à l'état électrique du module de détection par couplage inductif.

Le circuit résonant de ce document est sensible à un paramètre physique de l'environnement. Des paramètres environnementaux altèrent ainsi les paramètres électriques du circuit résonant du dispositif de détection, en altérant par exemple sa fréquence de résonance. Dans un exemple, le dispositif de détection comporte un substrat replié pour présenter deux faces en vis-à-vis. Chaque face comporte plusieurs enroulements conducteurs, les enroulements des deux faces étant interconnectés pour former un circuit résonant. Les deux faces du substrat sont séparées par une couche de diélectrique. La couche de diélectrique choisie dans un exemple est sensible à l'humidité. La variation des propriétés de cette couche de diélectrique altère la fréquence de résonance du circuit résonant.

Un inconvénient de ce dispositif est que, dans le cas d'une modification graduelle d'un circuit résonant de type LC fonction du paramètre physique environnemental à surveiller, celle-ci peuvent être en compétition avec des modifications parasites dues à un environnement difficile non maitrisé.

Un autre inconvénient de ce dispositif est que, dans le cas d'une modification importante du circuit résonant en fonction du paramètre physique environnemental à surveiller, le dispositif de détection ne peut être ni testé ni repéré pour cet état.

Enfin, si le résonateur est affecté par plusieurs paramètres physiques environnementaux, l'effet est globalisé sur un même résonateur ce qui ne permet pas de discriminer les différents paramètres. S'il peut être envisageable d'affecter deux paramètres électriques du résonateur, comme la fréquence de résonance et le facteur de qualité par exemple, cela reste limité et peut discriminant.

Le document GB2549611 décrit une conduite tubulaire ayant une couche de renforts en acier incluse à l'intérieur d'une couche tubulaire en polymère. Des enroulements de mesure sont inclus dans la couche tubulaire. Un champ magnétique alternatif peut être appliqué pour détecter des contraintes dans les renforts au moyen d'un enroulement d'excitation. Une jauge de contrainte est notamment utilisée et connectée en filaire à une antenne.

Le document US2013/273343 décrit une antenne inductive comprenant un premier enroulement conducteur planaire sur une surface de substrat, découpé par intervalles pour former des paires de premiers conducteurs. Un deuxième enroulement conducteur planaire est disposé sur une autre surface du substrat à l'opposée du premier enroulement, et découpé par intervalles pour former des paires de seconds conducteurs. Chaque paire des premiers conducteurs définit un sous-ensemble résonnant avec la paire de seconds conducteurs opposée.

Le document FR3062211 décrit un procédé de contrôle non destructif d'une conduite flexible sous-marine pour détecter une inondation d'un espace annulaire dans lequel se trouvent des armures. Le procédé comprend des étapes d'agencement d'un couple d'électrodes au voisinage d'une gaine externe, et de mesure de l'impédance aux borneds du couple d'électrode, à une fréquence comprise entre 10 Hz et 10 MHz. L'impédance mesurée est comparée avec des valeurs de référence pour déterminer la nature du fluide contenu dans l'espace annulaire.

L'invention vise à résoudre un ou plusieurs de ces inconvénients. L'invention porte ainsi sur une conduite flexible de transport de fluide, telle que définie dans les revendications annexées.

L'invention porte également sur les variantes des revendications dépendantes. L'homme du métier comprendra que chacune des caractéristiques de la description ou des revendications dépendantes peut être combinée indépendamment aux caractéristiques ci-dessus, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :
[Fig.1] est une vue schématique d'un système de détection d'une évolution d'un paramètre environnemental pour une conduite flexible selon un mode de réalisation de l'invention ;
[Fig.2] est une représentation schématique d'une variante d'un bloc de détection d'un système de détection pour une conduite flexible selon un mode de réalisation de l'invention ;
[Fig.3] est une représentation schématique d'un module de déclaration selon un exemple de mise en œuvre ;
[Fig.4] est une représentation schématique d'un module de déclaration selon un autre exemple de mise en oeuvre ;
[Fig.5] est une représentation schématique d'un module de déclaration selon un autre exemple de mise en oeuvre ;
[Fig.6] est une représentation schématique d'un module de détection selon un exemple de mise en œuvre ;
[Fig.7] est une représentation schématique d'un module de détection selon un autre exemple de mise en oeuvre ;
[Fig.8] et
[Fig.9] illustrent des pistes conductrices réalisables sur deux faces d'un substrat pour former des modules de détection selon les exemples des figures 6 ou 7 ;
[Fig.10] illustre la structure d'un exemple de conduite flexible de transport de fluide selon l'invention avec laquelle le module de détection est mis en oeuvre ;
[Fig.11] est une vue en coupe schématique d'un exemple de terminaison de conduite flexible pour une exploitation pétrolière ;
[Fig.12] est une vue en coupe transversale d'une conduite flexible selon la figure 10, mettant en œuvre un système de détection ;
[Fig.13] et
[Fig.14] sont des diagrammes illustrant les réponses en fréquence d'un module de détection en fonction de son mode ;
[Fig.15] et
[Fig.16] sont des diagrammes illustrant les réponses en fréquence d'un bloc de détection en fonction de son mode ;
[Fig.17] est une représentation schématique d'une autre variante d'un bloc de détection d'un système de détection pour une conduite flexible selon un mode de réalisation de l'invention.

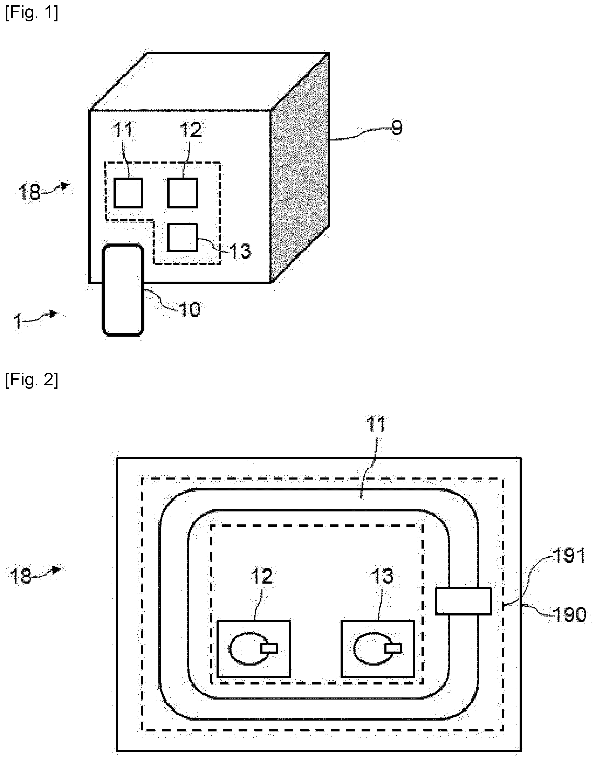

La figure 1 est une vue schématique d'un système de détection 1 d'une évolution d'un paramètre environnemental pour une conduite flexible selon un mode de réalisation de l'invention. Le système de détection 1 comprend ici un bloc de détection 18 fixé à un objet 9, et un dispositif de lecture sans contact en champ proche 10. Le bloc de détection 18 du système de détection 1 comprend ici un module de déclaration 11, un module de détection 12 et un module de détection 13. Les modules de détection 12 et 13 et le module de déclaration 11 sont distincts, dépourvus de connexion électrique entre eux. Les modules de détection 12 et 13 et le module de déclaration 11 sont fixés sur un objet 9, pour lequel on souhaite évaluer l'évolution d'un ou plusieurs paramètres environnementaux. Les modules de détection 12 et 13 sont disposés à proximité du module de déclaration 11.

L'invention propose un système de détection 1 dans lequel le module de déclaration 11 est configuré pour être détectable par le dispositif de lecture 10 à proximité, en n'étant peu ou pas affecté par la variation du paramètre environnemental à étudier. Le module de déclaration 11 peut, par sa détection de présence, être configuré pour déclarer la présence des modules de détection 12 et 13 à proximité. Le module de déclaration 11 est ainsi configuré pour communiquer sans contact en champ proche avec le dispositif de lecture 10, indépendamment dudit paramètre environnemental.

L'invention propose un système de détection 1 dans lequel un ou plusieurs modules de détection 12 ou 13 incluent chacun un circuit résonant LC, sensible à une évolution d'un paramètre environnemental à étudier. Un tel circuit résonant LC présente ainsi des premier et deuxième modes de fonctionnement, en fonction de la valeur du paramètre environnemental à étudier :
- un premier mode de fonctionnement dans lequel ce circuit résonant présente une fréquence de résonance comprise dans une plage prédéfinie. Dans ce mode de fonctionnement nominal, la fréquence de résonance n'est pas suffisamment altérée par une variation du paramètre environnemental ;
- un deuxième mode de fonctionnement dans lequel ce circuit résonant présente une fréquence de résonance hors de ladite plage ou une absence de fréquence de résonance. Ce deuxième mode permettant de témoigner de la variation d'un paramètre environnemental.

Une logique inverse des premier et deuxième modes de fonctionnement peut également être envisagée : l'absence de fréquence de résonance ou la fréquence de résonance hors plage peut être attribuée au deuxième mode de fonctionnement.

La plage prédéfinie de la fréquence de résonance du circuit résonant LC peut aller de 0,9*f0 à 1,1*f0 par exemple, ou encore de 0,8*f0 à 1,2*f0, avec f0 la fréquence de résonance nominale (correspondant à la fréquence de résonance du circuit résonant LC dans des contions normales d'utilisation) du circuit résonant LC.

Le système de détection 1 est avantageusement basé sur une détection de type tout ou rien des modules de détection 12 et 13. Le principe de détection tout ou rien est basé sur une variation 'significative' d'un élément électrique passif, par exemple une piste conductrice, une piste résistive ou une capacité, suite à un changement de l'environnement proche de cet élément électrique. La variation de l'élément électrique passif peut être réversible ou irréversible. Les modules de détection 12 et 13 peuvent ainsi fonctionner en tout ou rien, en fonction de leur mode de fonctionnement.

Un tel fonctionnement tout ou rien s'avère particulièrement utile, en particulier si l'environnement électromagnétique est variable ou perturbé et empêche ainsi une détection d'une variation limitée de la fréquence de résonance du modules de détection 12 ou 13. Par une détection en tout ou rien, on peut détecter de façon robuste si les modules de détection 12 ou 13 sont dans un premier ou un deuxième mode de fonctionnement. Les modules de détection 12 et 13 peuvent être sensibles à des paramètres environnementaux différents.

En fonction du paramètre environnemental à étudier, un composant électrique peut présenter une rupture (par exemple un fusible) ou une forte variation d'une caractéristique électrique pour altérer la fréquence de résonance du circuit résonant au moins d'un facteur 2, de préférence d'un facteur 5.

Les changements d'état de l'environnement proche des modules de détection 12 ou 13 sont par exemple ceux qui peuvent conduire à la corrosion d'éléments métalliques entrant dans la structure de la conduite flexible à laquelle le système de détection 1 peut être associé. Il peut s'agir en particulier d'infiltration d'eau (eau douce ou eau salée) ou de gaz corrosifs (H₂S) ou de gaz indésirables pour certaines applications (CO₂).

Le système de détection 1 peut utiliser les principes techniques des étiquettes RFID passives pour le mode d'échange de données et pour le mode d'alimentation électrique par télé-alimentation.

La communication de données et l'alimentation à distance peuvent ainsi faire appel aux solutions techniques des étiquettes RFID, en particulier des étiquettes RFID LF ou HF utilisant un lien radiofréquence de type inductif. Cette technologie est utilisée par des systèmes d'identification standardisés, par exemple les systèmes aux normes ISO14443, ISO15693 et ISO18000-3 à la fréquence de 13.56MHz, et ISO18000-2 à une fréquence inférieure à 150kHz.

Le domaine de fréquence peut s'étendre du domaine des basses fréquences (LF : 30kHz - 300kHz) au domaine des hautes fréquences (HF : 3MHz - 30MHz). Les antennes forment alors typiquement un circuit résonant LC, l'inductance L étant formée par un bobinage dont la géométrie conditionne le couplage avec le champ électromagnétique (appelé circuit d'antenne par la suite du texte), la capacité C pouvant être intégrée (même partiellement) dans un circuit intégré.

La figure 2 est une représentation schématique d'un bloc de détection 18 d'un système 1 incluant un module de détection déclaration 11 et des modules de détection 12 et 13 selon un mode de réalisation de l'invention. Les modules 11 à 13 sont ici formés sur un même substrat 190, par exemple un film plastique flexible. La formation des modules 11 à 13 sur un même substrat permet d'agencer avec précision ces modules entre eux et permet de réduire le prix de fabrication du système 1. Afin d'assurer sa protection et son immunité par rapport à un ou plusieurs paramètres environnementaux à étudier, le module de déclaration 11 est protégé dans une zone 191 (illustrée en trait discontinu). Le module 11 peut ainsi être scellé entre un film de protection et le substrat 190. On peut par exemple utiliser un film de protection fin sur la zone 191, par exemple d'une épaisseur de 0,1mm, afin de favoriser la compacité du bloc de détection 18 du système 1 qui doit être associée à une conduite flexible (le système est ici illustré en association avec un objet 9 dans un souci de simplification). Le module 11 loge les modules 12 et 13 dans la partie médiane de son circuit d'antenne. La zone 191 ménage une ouverture dans laquelle les modules 12 et 13 sont disposés, donc non recouverts par la zone 191, tout en étant à proximité du module 11. Les modules 12 et 13 sont ainsi exposés au paramètre environnemental, en étant par exemple exposés à un fluide pouvant ou non inclure un polluant à détecter. Les modules 12 et 13 ou au moins un de leurs composants électriques ne sont pas recouverts par un film de protection. On peut également envisager que les dispositifs 12 et 13 soient disposés à la périphérie de la zone 191.

Dans cet exemple, le module 11 présente un circuit d'antenne par l'intermédiaire duquel ce module 11 est configuré pour communiquer avec le lecteur 10. Le circuit d'antenne du module 11 peut être couplé magnétiquement avec des circuits d'antenne des modules 12 et 13. Le circuit d'antenne du module 11 peut servir d'antenne relais pour les modules de détection 12 et 13, qui peuvent être pourvus de circuits d'antennes résonants de beaucoup plus petites tailles. On peut ainsi améliorer la portée des antennes des modules 12 et 13, même avec des tailles réduites.

Le module de déclaration 11 peut disposer d'un circuit d'antenne associé à une puce RFID toujours opérationnelle. Ce circuit d'antenne est du type résonateur LC. Cette puce RFID est une puce RFID principale dont le fonctionnement est non dégradé par les changements d'état de l'environnement à détecter.

Les circuits d'antenne des modules de détection 12 et 13 forment chacun un résonateur LC. Ce résonateur LC est fortement modifié par un des changements d'état de l'environnement à détecter (forte variation de sa fréquence de résonance ou forte réduction de son facteur de qualité). Ce résonateur peut être un simple circuit LC passif, et la détection du changement d'état peut alors s'effectuer sur l'analyse de la forme de sa réponse en fréquence. Ce changement d'état de l'environnement à détecter peut également induire un passage du résonateur d'un deuxième mode de fonctionnement vers le premier mode de fonctionnement.

Le module de détection 12 (ou 13) peut également inclure une puce RFID connectée au résonateur LC. La détection du changement d'état de l'environnement peut s'effectuer sur la lecture possible ou non de l'identifiant de la puce RFID connectée au résonateur du module de détection 12.

La lecture de l'identifiant de la puce RFID du module de déclaration 11 par le lecteur 10 permet de valider être en présence de ce module 11 (et donc du bloc de détection 18 du système de détection 1) en l'absence de réponse des modules de détection 12 et 13, afin d'éviter un faux diagnostic correspondant à une recherche qui serait effectuée par le lecteur 10 au mauvais endroit, à distance du module de déclaration 11.

L'absence de réponse du module de déclaration 11 correspond soit à l'absence de celui-ci à proximité du lecteur 10, soit à son dysfonctionnement.

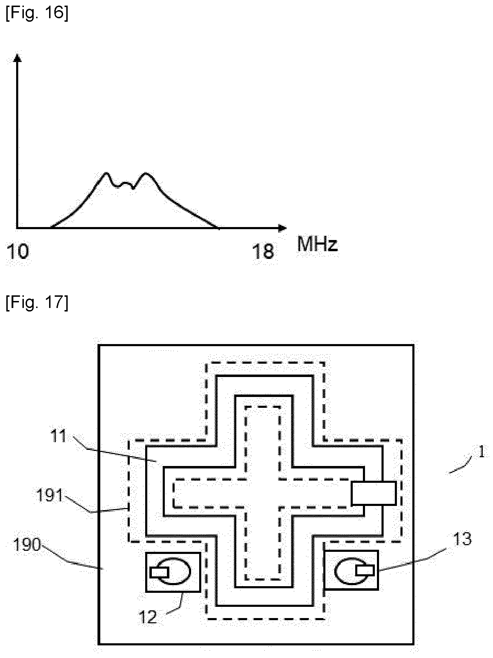

La figure 17 illustre une variante de réalisation dans laquelle les modules 12 et 13 sont disposés à la périphérie de la zone 191. Dans cette variante, le circuit d'antenne du module 11 suit une forme en croix, et les modules de détection 12 et 13 sont placés à proximité de ce circuit d'antenne, en dehors de la zone 191.

On notera que la forme de la zone 191 pourra également être prévue pour qu'un des modules de détection 12-13 soit placé dans une ouverture au centre de cette zone, et qu'un autre des modules de détection 12-13 soit placé en périphérie.

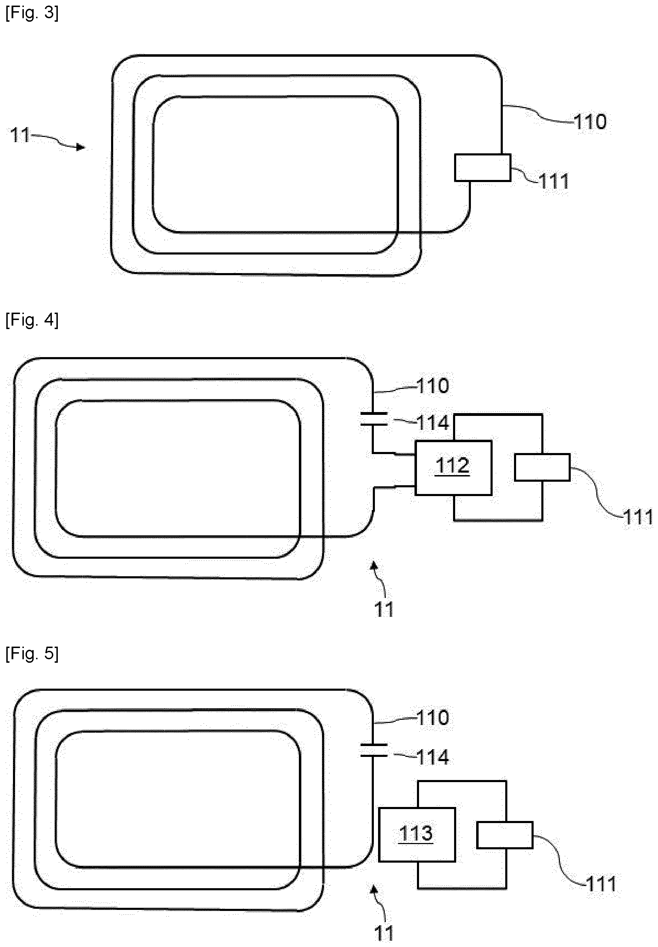

La figure 3 est une représentation schématique d'un module de déclaration 11 selon un exemple de mise en œuvre. Dans cet exemple, le module 11 inclut un résonateur LC. Le module 11 est ici pourvu d'une puce RFID 111. La puce 111 est configurée pour fournir un identifiant du module 11, et éventuellement un identifiant des modules de détection associés 12 et 13, lors d'une requête provenant du lecteur 10. Le résonateur LC inclut ici un enroulement 110 de plusieurs spires, formant un circuit d'antenne et une inductance pour le résonateur LC. L'enroulement 110 peut présenter une aire de 100 cm², afin de favoriser une communication avec le lecteur 10. L'enroulement 110 est ici connecté aux bornes de la puce RFID 111. La puce RFID 111 peut inclure une capacité intégrée pour le résonateur LC (par exemple de 23,5pF, ou encore de 97pF). La capacité sera par exemple définie pour être le plus robuste possible à l'environnement pour le module de déclaration 11, en présentant par exemple une valeur relativement élevée de 97pF. La capacité sera par exemple d'une valeur plus basse pour les modules de détection 12 et 13, par exemple de 23,5pF. Le résonateur LC du module 11 est insensible ou peu sensible aux variations du paramètre environnemental à étudier.

La figure 4 est une représentation schématique d'un module de déclaration 11 selon un autre exemple de mise en œuvre. Dans cet exemple, le module 11 inclut également un résonateur LC. Le module 11 est ici aussi pourvu d'une puce RFID 111. La puce 111 est configurée pour fournir un identifiant du module 11, et éventuellement un identifiant des modules de détection associés 12 et 13, lors d'une requête provenant du lecteur 10. Le résonateur LC inclut ici un enroulement 110 de plusieurs spires, formant un circuit d'antenne et une inductance pour le résonateur LC. L'enroulement 110 est connecté à un condensateur 114.

L'enroulement 110 est ici connecté à un circuit d'adaptation 112. La puce 111 est également connectée aux bornes du circuit d'adaptation 112. L'enroulement 110 et le condensateur 114 peuvent former un résonateur LC principal. Une antenne inductive auto-résonante telle que décrite dans le document FR2961353 peut notamment être utilisée. Une telle antenne est particulièrement adaptée à une utilisation en milieu humide, avec une fréquence de résonance peu affectée par des variations d'humidité à proximité. Le circuit d'adaptation 112 peut inclure un enroulement de plus petite dimension pour former un circuit résonant avec la puce RFID 111, et éventuellement pour permettre l'adaptation de la puce 111 au résonateur LC principal. Les résonateurs LC du module 11 sont insensibles ou peu sensibles aux variations du paramètre environnemental à étudier.

La figure 5 est une représentation schématique d'un module de déclaration 11 selon un autre exemple de mise en œuvre. Dans cet exemple, le module 11 inclut également un résonateur LC. Le module 11 est ici aussi pourvu d'une puce RFID 111. La puce 111 est configurée pour fournir un identifiant du module 11, et éventuellement un identifiant des modules de détection associés 12 et 13, lors d'une requête provenant du lecteur 10. Le résonateur LC inclut ici un enroulement 110 de plusieurs spires, formant un circuit d'antenne et une inductance pour le résonateur LC. L'enroulement 110 est connecté à un condensateur 114.

L'enroulement 110 est ici couplé magnétiquement à un circuit d'adaptation 113. La puce 111 est connectée aux bornes du circuit d'adaptation 113. L'enroulement 110 et le condensateur 114 peuvent former un résonateur LC principal. Le circuit d'adaptation 113 peut inclure un enroulement de plus petite dimension pour former un circuit résonant avec la puce RFID 111, et éventuellement pour permettre l'adaptation de la puce 111 au résonateur LC principal. Les résonateurs LC du module 11 sont insensibles ou peu sensibles aux variations du paramètre environnemental à étudier.

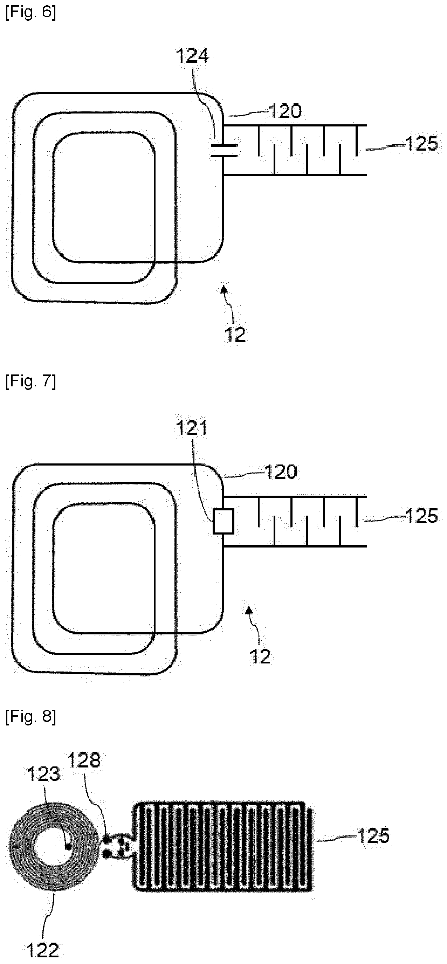

La figure 6 est une représentation schématique d'un module de détection 12 selon un exemple de mise en œuvre. Dans cet exemple, le module 12 se présente sous la forme d'un résonateur LC. Le module 12 est ici dépourvu de puce RFID. Le module 12 comporte ici un enroulement 120 de plusieurs spires conductrices, destinées à former l'inductance du circuit LC. L'enroulement 120 est ici connecté aux bornes d'un condensateur 124. Le condensateur 124 est insensible ou peu sensible aux variations du paramètre environnemental à étudier. La structure du condensateur 124 peut par exemple être protégée du paramètre environnemental par une ou plusieurs couches de protection appropriées. Le condensateur 124 forme ici une partie fixe de la capacité du circuit LC. Un condensateur additionnel 125 est connecté aux bornes du condensateur 124 décrit précédemment. Ce condensateur additionnel 125 est sensible aux variations du paramètre environnemental. Le condensateur additionnel 125 peut par exemple être mis au contact d'un fluide, dans lequel on souhaite détecter la variation du paramètre environnemental. Le condensateur additionnel 125 peut par exemple présenter une partie non recouverte d'une couche de protection. Le condensateur additionnel 125 comporte ici une géométrie en peigne, avec des lignes métalliques interdigitées, de sorte que sa capacité est fortement dépendante des caractéristiques électriques du milieu proche ou d'un fluide en contact. Le condensateur 125 peut par exemple être mis en contact électrique d'un fluide dans lequel on souhaite détecter la variation du paramètre environnemental, ou bien être mis en présence proche du fluide et isolé électriquement de celui-ci par une couche isolante de faible épaisseur assurant une isolation galvanique.

On peut par exemple décrire une application à la détection de l'eau. L'eau (douce ou salée) est caractérisée par une forte constante diélectrique (εr= εr / εο~80). L'eau, contenant des sels en solution, se caractérise par une conductivité électrique croissante avec la concentration de sel.

Un condensateur à géométrie en peigne présente une capacité dépendant de la constante diélectrique des matériaux à proximité, et les pertes de la capacité (résistance parallèle) sont dépendantes de la conductivité des matériaux à proximité (de manière plus importante s'il y a contact électrique avec le matériau). La géométrie en peigne du condensateur 125 permet l'équivalent d'un condensateur formé de deux lignes parallèles d'une plus grande longueur, pratiquement l'équivalent de la longueur déployée du méandre formé dans la géométrie en peigne, environ 25cm pour un exemple tel que celui de la figure 8 décrite ci-après.

La capacité entre deux lignes métalliques parallèles est proportionnelle à la constante diélectrique du matériau baignant ces deux lignes. L'épaisseur de matériau autour des lignes métalliques contribuant à la valeur de capacité est pratiquement de l'ordre de l'écartement entre les deux lignes. La valeur de capacité dans le 'vide' est de l'ordre de quelques 10pF à 30pF par mètre de ligne selon le rapport entre la largeur des lignes et l'écartement entre celles-ci. Cette valeur de capacité est multipliée par un facteur de plusieurs dizaines lorsque le matériau autour des lignes métalliques est imprégné d'eau (constante diélectrique (εr= εr / εο~80)).

La conductivité de l'eau induit des pertes qui se traduisent par une résistance parallèle suivant la quantité d'ions dissout, de l'ordre du kilo ohms par mètre de ligne avec de l'eau de mer et dans le cas où les lignes métalliques sont électriquement isolées. La résistance parallèle est beaucoup plus faible dans le cas où une conduction électrolytique peut s'établir entre les deux lignes métalliques.

La figure 7 est une représentation schématique d'un module de détection 12 selon un autre exemple de mise en œuvre. Dans cet exemple, le module 12 se présente également sous la forme d'un résonateur LC. Le module 12 est ici muni d'une puce RFID 121. Le module 12 comporte ici un enroulement 120 de plusieurs spires conductrices, destinées à former l'inductance du circuit LC. L'enroulement 120 est ici connecté aux bornes de la puce RFID 121. La puce RFID 121 inclut ici une capacité (par exemple de 23,5pF). La capacité de la puce 121 est insensible ou peu sensible aux variations du paramètre environnemental à étudier. La capacité interne de la puce 121 peut intrinsèquement être protégée du paramètre environnemental par une ou plusieurs couches de protection de cette puce 121. La capacité de la puce 121 forme ici une partie fixe de la capacité du circuit LC. Un condensateur additionnel 125 est connecté aux bornes de la puce 121. Le condensateur additionnel 125 est sensible aux variations du paramètre environnemental. Le condensateur additionnel 125 peut par exemple être mis au contact d'un fluide, dans lequel on souhaite détecter la variation du paramètre environnemental, ou bien être mis en présence proche du fluide et isolé électriquement de celui-ci par une couche isolante de faible épaisseur. Le condensateur additionnel 125 peut par exemple présenter une partie non recouverte d'une couche de protection. Le condensateur additionnel 125 comporte ici une géométrie en peigne, de sorte que sa capacité est fortement dépendante des caractéristiques électriques du milieu proche ou d'un fluide en contact..

On peut par exemple prévoir que l'enroulement 120 occupe un carré de 14mm de côté, incluant 19 spires ménagées sur deux faces d'un substrat, le pas des spires étant de 0,4mm et la largeur des spires étant de 0,2mm.

Les condensateurs 124 et 125 (ou le condensateur de la puce 121 et le condensateur additionnel 125) sont ici illustrés en parallèle. On peut cependant également envisager une connexion en série de ces condensateurs, pour inverser par exemple le sens de transition entre les deux modes de fonctionnement : l'influence de la présence d'eau (en particulier la présence d'eau salée) fait chuter l'impédance du condensateur 125, établissant de cette manière un mode de fonctionnement nominal avec une résonance directe entre l'inductance 123 et le condensateur 124.

La fréquence de résonance du circuit LC du module 12 dans son premier mode de fonctionnement est avantageusement proche de la fréquence de résonance du circuit LC du module 11.

Lorsque le module de déclaration 11 est associé à plusieurs modules de détection différents et lorsqu'il est envisagé une analyse de la réponse en fréquence du bloc de détection 18, les différents modules de détection présenteront avantageusement des fréquences de résonance distinctes.

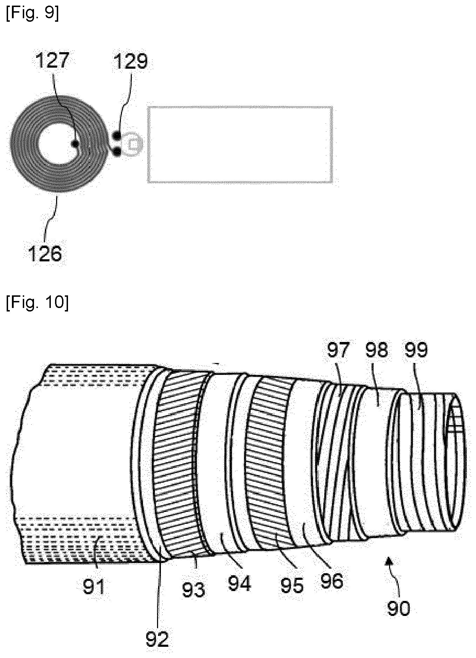

Les figures 8 et 9 illustrent des pistes conductrices pouvant être formées sur deux faces opposées d'un substrat, afin de former sélectivement un module 12 correspondant soit à la configuration de la figure 6, soit à la configuration de la figure 7.

La figure 8 illustre la configuration sur une face du substrat. Des pastilles 128 sont ménagées entre des spires 122 et des pistes interdigitées d'un condensateur additionnel 125. Les spires 122 appartiennent à l'enroulement 120. Une extrémité des spires 122 est connectée à une pastille 123. Une autre extrémité des spires 122 est connectée à une des pastilles 128.

La figure 9 illustre la configuration sur une autre face du substrat, vue par transparence depuis le même point de vue que la figure 8. Des pastilles 129 sont ménagées à côté de spires 126. Les pastilles 129 sont en vis-à-vis des pastilles 128. La pastille 127 est en vis-à-vis de la pastille 123. Les pastilles 123 et 127 sont connectées électriquement.

Les pastilles 128 et 129 en vis-à-vis sont connectées électriquement. Des plots de raccordement destinés à connecter sélectivement soit une puce RFID 121, soit un condensateur 124, sont connectés aux pastilles 128 et 129.

Pour différencier la puce RFID 121 de la puce RFID 111 du module 11, celles-ci présentent avantageusement des identifiants différents. Les modules peuvent également être différenciés par des mémoires mémorisant des informations différentes, lues par le lecteur 10.

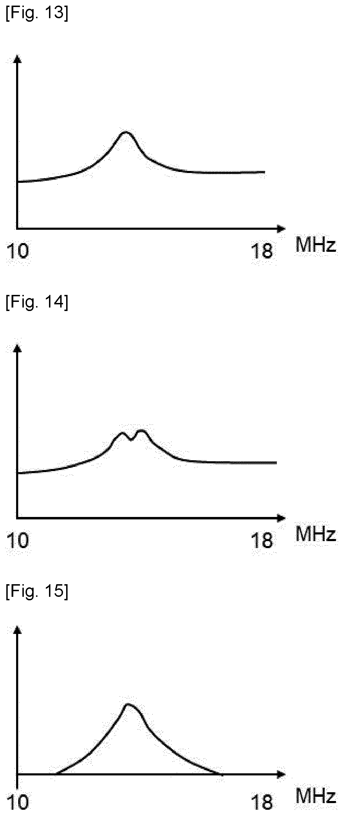

Les diagrammes des figures 13 et 14 illustrent les réponses en fréquence respectives, enregistrées par un lecteur 10 :
- d'un module de déclaration 11 et d'un module de détection 12 couplé, ce module de détection ayant une fréquence de résonance dans son second mode, par exemple suite à une dégradation du fait d'une variation d'un paramètre environnemental ;
- d'un module de déclaration 11 et d'un module de détection 12 couplé, ce module de détection ayant une fréquence de résonance dans son premier mode, par exemple en l'absence de variation suffisante d'un paramètre environnemental.

Dans le présent cas de figure, le module de détection 12 a une fréquence de résonance dans son premier mode qui est centrée sur la fréquence de résonance du module de déclaration 11. On constate que la réponse en fréquence pour le premier cas de figure présente un profil simple correspondant aux caractéristiques du circuit LC du module de déclaration 11. On constate que la réponse en fréquence dans le second cas de figure présente un profil complexe avec deux pics séparés par un creux, liée à l'intégrité du circuit LC du module de détection 12, couplé au circuit LC du module de déclaration 11.

Les figures 15 et 16 illustrent les réponses en fréquence respectives enregistrées par un lecteur 10 :
- d'un module de déclaration 11 et de modules de détection 12 couplés, ces modules de détection ayant été dégradés du fait d'une variation d'un paramètre environnemental ;
- d'un module de déclaration 11 et de modules de détection 12 couplés, ces modules de détection ayant été conservés intacts en l'absence de variation suffisante d'un paramètre environnemental.

Dans le présent cas de figure, les modules de détection 12 ont des fréquences de résonance dans leur premier mode qui sont réparties de part et d'autre de la fréquence de résonance du module de déclaration 11, par exemple à 13,3 MHz et 13,9MHz pour une fréquence de résonance de 13,6MHz du module de déclaration 11.

On constate que la réponse en fréquence pour le premier cas de figure présente un profil simple correspondant aux caractéristiques du circuit LC du module de déclaration 11. On constate que la réponse en fréquence dans le second cas de figure présente un profil complexe avec des pics séparés par plusieurs creux, liés à l'intégrité des circuits LC des modules de détection 12, couplés au circuit LC du module de déclaration 11.

Dans les exemples précédents, les modules de détection sont couplés au circuit d'antenne du module de déclaration 11. Un module de détection 12 comprenant une puce RFID peut ainsi communiquer avec le lecteur 10, le circuit d'antenne du module de déclaration servant d'antenne relais. On peut également prévoir qu'un module de détection 12 comprenant une puce RFID puisse communiquer indépendamment avec le lecteur 10.

La figure 10 est une illustration d'un exemple de structure d'une conduite flexible 90 pour le transport d'un fluide, en particulier pour le transport de pétrole en milieu marin.

La conduite flexible 90 comporte ici, en partant de l'intérieur vers l'extérieur une carcasse interne 99, une gaine interne d'étanchéité 98, une voûte de pression 97, une première couche anti-usure 96, une première nappe d'armures de traction 95, une deuxième couche anti-usure 94, une deuxième nappe d'armures de traction 93, une ou plusieurs couches de bandes de maintien 92 et une gaine externe 91.

La carcasse interne 99 est une couche métallique tubulaire et flexible qui n'est pas étanche. Sa fonction principale est la reprise des efforts radiaux orientés de l'extérieur vers l'intérieur de la conduite, notamment ceux liés à la pression hydrostatique lorsque la conduite est immergée à grande profondeur. Elle contribue à éviter l'écrasement de la conduite sous l'effet de la pression extérieure. La carcasse interne 99 est réalisée à partir d'un feuillard métallique en acier inoxydable qui est profilé en forme de S puis enroulé en hélice pour former des spires agrafées. L'enroulement hélicoïdal du feuillard métallique profilé formant la carcasse interne 99 est à pas court, c'est-à-dire qu'il présente un angle d'hélice de valeur absolue proche de 90°, typiquement compris entre 75° et 90°. L'épaisseur de la carcasse interne 99 est typiquement comprise entre 5mm et 20mm.

La gaine interne d'étanchéité 98, encore appelée gaine de pression, est une couche étanche en polymère qui entoure la carcasse interne 99. La gaine interne d'étanchéité 98 est destinée à confiner de manière étanche le fluide transporté dans la conduite flexible 90. Elle est formée en matériau polymère, par exemple à base d'un polyoléfine tel que du polyéthylène, à base d'un polyamide tel que du PA11 ou du PA12, ou à base d'un polymère fluoré tel que du polyfluorure de vinylidène (PVDF). L'épaisseur de la gaine interne d'étanchéité 98 est par exemple comprise entre 5 mm et 20 mm.

La voûte de pression 97 est une couche métallique tubulaire et flexible qui n'est pas étanche et dont la fonction principale de reprendre les efforts radiaux liés à la pression régnant à l'intérieur de la gaine interne d'étanchéité 98. La voûte de pression 97 permet ainsi d'éviter l'éclatement de la gaine interne d'étanchéité 98 sous l'effet de la pression exercée par le fluide transporté dans la conduite flexible 90. La voûte de pression 97 par exemple formée d'un fil profilé métallique entouré en hélice et formant des spires agrafées. Ce fil profilé est enroulé en hélice à pas court, c'est-à-dire avec un angle d'hélice de valeur absolue proche de 90°, typiquement compris entre 75° et 90°. Ce fil profilé présente généralement une géométrie complexe, notamment en forme de Z, de T, de U, de K, de X ou de I. L'épaisseur de la voûte de pression 97 est typiquement comprise entre 5mm et 20mm.

Les deux nappes d'armures de traction 93, 95 ont pour fonction principale de reprendre les efforts axiaux de traction exercés sur la conduite flexible 90, par exemple ceux liés au poids de la conduite lorsque celle-ci s'étend verticalement depuis le fond marin jusqu'à une unité de production située à la surface. Chaque nappe d'armures de traction 93, 95 est constituée d'une pluralité de fils d'armure de traction enroulés hélicoïdalement à pas long, c'est-à-dire avec un angle d'hélice dont la valeur absolue est inférieure à 60°, et est typiquement comprise entre 25° et 55°. Les fils d'armure de traction sont généralement métalliques et de section sensiblement rectangulaire. Les deux nappes d'armures de traction 93, 95 sont généralement croisées, c'est-à-dire enroulées selon des angles d'hélice opposés, ce qui permet d'équilibrer la conduite en torsion et ainsi de minimiser sa tendance à tourner autour de son axe longitudinal sous l'effet d'une traction. L'épaisseur de chaque nappe d'armures de traction 93, 95 est typiquement comprise entre 2mm et 10mm.

La première couche anti-usure 96 a pour fonction d'éviter l'usure par frottement entre d'une part la voûte de pression 97 et d'autre part la première nappe d'armures de traction 95. La deuxième couche anti-usure 94 a pour fonction d'éviter l'usure par frottement entre d'une part la première nappe d'armures de traction 95 et d'autre part la deuxième nappe d'armures de traction 93. Chaque couche anti-usure 94, 96 est constituée d'une bande polymérique enroulée en hélice à pas court, typiquement d'une bande d'épaisseur 3mm, qui est disposée à l'interface entre les deux couches métalliques susceptibles de frotter l'une contre l'autre, de sorte que les contacts directs métal sur métal sont évités.

Les couches de bandes de maintien 92 sont enroulées en hélice à pas court autour de la deuxième nappe d'armures de traction 93. Certaines sont destinées au maintien provisoire des fils d'armure pendant la fabrication de la conduite flexible 90, en empêchant notamment que la nappe externe d'armures de traction 93 puisse se désorganiser avant l'étape finale de fabrication de la gaine externe 91. De plus, les conduites flexibles 90 destinées à être immergées à grande profondeur comportent avantageusement des bandes de maintien 92 de grande résistance mécanique, et dont la fonction est d'empêcher le gonflement des nappes d'armures de traction lorsque la conduite est soumise à des efforts de compression axiale qui sont exercés lorsque la pression régnant à l'intérieur de la conduite est inférieure à la pression régnant à l'extérieur de la conduite. Ces bandes anti-gonflement sont généralement tissées ou renforcées avec des fibres légères et très résistantes, notamment avec des fibres d'aramide.

La gaine externe 91 est une gaine de protection étanche qui est destinée à empêcher la perméation de fluide depuis l'extérieur de la conduite flexible 90 vers l'intérieur. Elle est avantageusement réalisée par extrusion d'un matériau polymère thermoplastique, typiquement un polyamide ou un polyéthylène, autour des couches de bandes de maintien 92. L'épaisseur de la gaine externe 91 est par exemple comprise entre 5mm et 15mm.

La conduite flexible 90 est de type non liée (« unbonded » en anglais) car les couches métalliques de renfort, notamment la voûte de pression 97 et les deux nappes d'armure de traction 93, 95, sont libres de se déplacer longitudinalement par rapport aux couches adjacentes lorsque la conduite est fléchie. Une conduite flexible non liée est généralement dépourvue de matériaux liants raccordant les couches concentriques formant la conduite.

La conduite flexible 90 est par exemple réalisée suivant les documents normatifs API 17J et API RP 17B établis par l'American Petroleum Institute. La conduite flexible 90 est notamment utilisée pour l'exploitation pétrolière ou gazière offshore dans des conditions très sévères. Ainsi, les hydrocarbures transportés peuvent présenter une pression et une température très élevées, par exemple une pression comprise entre 500 bars et 1500 bars, et une température comprise entre 110°C et 130°C. De plus, dans le cas où la conduite flexible est immergée à grande profondeur, celle-ci doit être capable de résister à une pression externe très élevée, par exemple de l'ordre de 250 bars si la conduite est immergée à 2500 mètres de profondeur. La conduite flexible 90 doit aussi pouvoir résister à de très fortes tensions, couramment plusieurs dizaines de tonnes, auxquelles elle sont soumises en service et/ou lors de son installation en mer. Le diamètre intérieur de la conduite flexible 90 est typiquement compris entre 50mm et 400mm, principalement entre 100mm et 250mm.

La gaine interne d'étanchéité 98 est étanche aux liquides mais pas aux gaz, si bien que les gaz présents dans l'hydrocarbure peuvent lentement diffuser à travers cette dernière, notamment lorsque la température et la pression sont élevées. Ce phénomène concerne principalement des molécules de petite taille, notamment l'eau en phase vapeur, et les gaz de dioxyde de carbone (CO₂), de sulfure d'hydrogène (H₂S) et de méthane (CH₄). Ainsi, lorsque l'hydrocarbure contient un ou plusieurs de ces gaz, ce ou ces derniers peuvent lentement diffuser à travers la gaine interne d'étanchéité 98 et venir s'accumuler dans l'espace annulaire situé entre d'une part la face externe de la gaine interne d'étanchéité 98 et d'autre part la face interne de la gaine externe 91. Dans le cas où cet espace annulaire se trouve accidentellement rempli d'eau liquide, la combinaison de la présence d'eau liquide avec la présence de gaz acides du type CO₂ et/ou H₂S et/ou CH₄ peut générer un milieu acide corrosif pour les fils métalliques de la voûte de pression 97 et des deux nappes d'armures de traction 93, 95, notamment lorsque ces fils métalliques sont réalisés en acier au carbone.

Ainsi, lorsque la conduite flexible 90 est immergée et en service, une déchirure accidentelle de la gaine externe 91 peut provoquer une inondation de cet espace annulaire par de l'eau de mer salée, et cette inondation peut à terme, provoquer une corrosion de la voûte de pression 97 et/ou des nappes d'armures de traction 93, 95 dans le cas où l'hydrocarbure transporté comporte une forte teneur en gaz acide.

De plus, même si l'étanchéité de la gaine externe 91 est préservée, il est possible que de la vapeur d'eau qui se trouve initialement dans l'hydrocarbure transporté puisse lentement diffuser à travers la gaine interne d'étanchéité 98, et venir ensuite se condenser sous forme d'eau douce dans l'espace annulaire, avec là aussi dans certains cas particuliers un risque potentiel de corrosion de la voûte de pression 97 et/ou des nappes d'armures de traction 93, 95. Ce risque est cependant nettement inférieur à celui lié à une déchirure accidentelle de la gaine externe 91, car le phénomène de diffusion d'eau est pris en compte dès la conception de la conduite. Cependant, ce phénomène de diffusion d'eau peut devenir important dans le cas où la durée d'utilisation de la conduite flexible doit être prolongée au-delà de la durée de vie prévue initialement, typiquement au-delà de 20 ans de service, afin de continuer à exploiter un vieux gisement pétrolier dans lequel la teneur en eau a significativement augmenté.

Ainsi, le principal risque de corrosion est associé à une inondation accidentelle par de l'eau de mer de l'espace annulaire situé entre d'une part la face externe de la gaine interne d'étanchéité 98 et d'autre part la face interne de la gaine externe 91, et il est donc important de pouvoir détecter en service la présence d'eau salée dans cet espace annulaire.

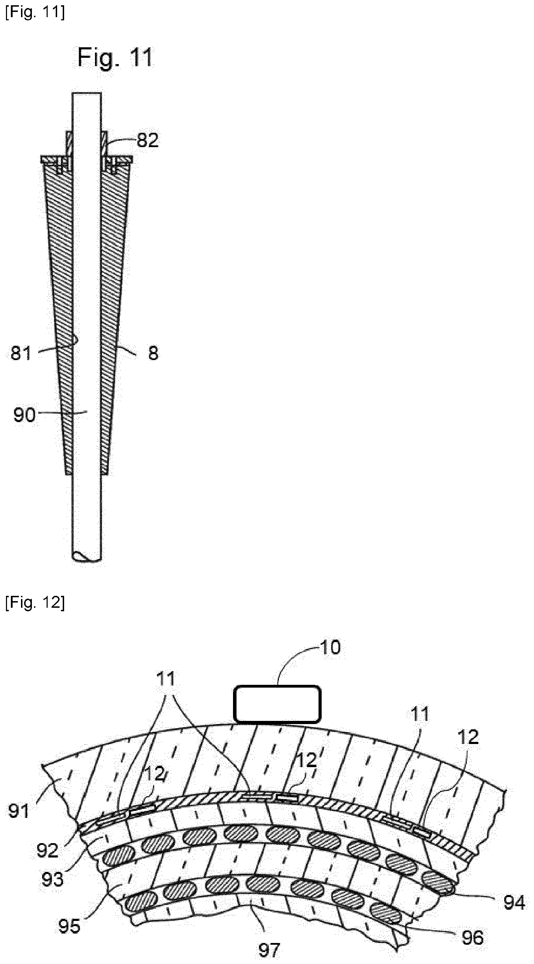

La conduite flexible 90 peut être fixée dans un raidisseur 8 au niveau de son extrémité supérieure. La conduite 90 peut ainsi traverser un alésage 81 d'un tel raidisseur 8 et être fixée par un embout 82 à un tel raidisseur 8, comme illustré à la figure 11.

Le système de détection 1 est ici configuré pour déterminer la présence d'eau salée sous la gaine externe 91, pouvant être synonyme d'une fuite et d'un risque de corrosion accélérée, pouvant par exemple toucher les nappes d'armure de traction 93, 95 et/ou la voûte de pression 97. L'intégration du système de détection avec la conduite flexible 90 peut bien entendu être réalisée pour tout autre type de structure de conduite flexible.

Pour déterminer la présence d'eau salée, la conduite flexible 90 comporte plusieurs couples de modules 11 et 12 (chaque couple formant un bloc de détection 18 du système 1), répartis sur sa circonférence, comme illustré sur la vue en coupe de la figure 12. Plusieurs blocs de détection 18 du système 1 sont également avantageusement répartis sur la longueur de la conduite flexible, sous la gaine externe 91. Les modules 11 et 12 sont ici disposés à l'intérieur de la couche de maintien 92, sous la gaine externe 91. Les modules 11 et 12 sont disposés à l'extérieur des couches métalliques de renfort situé dans l'espace annulaire 93, 95, et 97, qui empêcheraient une communication avec ces modules 11 et 12 depuis l'extérieur de la conduite flexible afin de pouvoir détecter les différents blocs de détection 18 du système de détection 1. Des ouvertures peuvent être ménagées dans la couche de bandes de maintien 92, afin de positionner les modules 12 en vis-à-vis de la gaine externe 91, et ainsi être potentiellement en contact avec de l'eau salée ayant pénétré accidentellement entre la gaine 91 et la couche de bandes de maintien 92. La couche de bandes de maintien 92 peut former une séparation avec la nappe externe d'armures de traction 93. Les blocs de détection 18 sont maintenus à distance de la surface externe de la nappe externe d'armures métalliques de traction 93 (par exemple d'une épaisseur comprise entre 1 et 4 mm), à l'intérieur de la couche de bandes de maintien tissées 92 ou entre la couche 92 et la gaine externe 91.

Avantageusement, les blocs de détection 18 sont préalablement intégrés dans une bande de maintien qui est ensuite enroulée autour de la nappe externe d'amures de traction 93 pour former la couche de bandes de maintien 92.

En outre, avantageusement, une couche d'isolation thermique est disposée autour de chaque bloc de détection 18 afin d'éviter qu'il soit endommagé par la chaleur lors de l'extrusion de la gaine externe 91. De plus, cette couche d'isolation thermique est à la fois amagnétique et électriquement isolante pour ne pas perturber les communications par onde électromagnétique entre le bloc de détection et l'extérieur de la conduite.

Le système de détection 1 comporte ici un lecteur sans contact 10, positionné à l'extérieur de la gaine externe 91. Le lecteur 10 est par exemple fixé sur un robot mobile parcourant une face externe de la gaine externe 91, afin de pouvoir lire les différents modules de déclaration 11, et ainsi pouvoir déterminer si une infiltration d'eau a eu lieu en différents emplacements. La présence d'un bloc de détection 18 peut ainsi être réalisée par la lecture du module de déclaration 11 associé à ce bloc de détection 18, par un lecteur 10.

L'invention permet d'éviter un marquage en surface de la gaine externe 91 de la conduite 90, en vue d'indiquer la présence d'un module de détection 12. On souhaite en effet éviter un marquage en surface de la gaine externe 91, cette surface pouvant être altérée par abrasion et/ou par des dépôts en milieu marin. L'identification de la présence d'un module de détection 12 peut ainsi être réalisée par un lecteur 10 indépendamment de l'état de surface de la gaine externe 91.

Si le lecteur 10 est porté par un robot d'inspection, le système 1 selon l'invention permet de trancher entre les deux hypothèses suivantes si aucun module de déclaration n'est détecté :
- la zone inspectée ne contient pas de bloc de détection 18 ;
- la zone inspectée contient un bloc de détection 18 dont le module de déclaration 11 est défaillant (auquel cas des modules de détection peuvent être accessibles mais l'information qu'ils renvoient est inutilisable).

Si un module de déclaration est détecté ou identifié, le dispositif de lecture 10 peut analyser le dispositif de détection afin de déterminer l'état des modules de détection associés. L'analyse du bloc de détection 18 peut s'effectuer par un relevé de sa réponse en fréquence ou bien par un inventaire des puces RFID lues par le dispositif de lecture 10.

Ainsi, un procédé d'inspection d'une conduite flexible 90 peut être mis en œuvre comme suit. Un robot d'inspection se déplace sur la surface de la gaine externe 91. Le robot d'inspection est muni d'un lecteur 10, type lecteur RFID, pour détecter chaque module de déclaration 11 d'un bloc de détection 18, et vérifier l'état du module de détection 12 associé.

Le robot peut mettre en œuvre une étape de positionnement de son lecteur RFID en face d'un module de déclaration 11, par exemple par un arrêt à une position fixe, ou par un ralentissement du déplacement du robot, pour disposer d'un temps suffisant pour détecter et analyser le module de déclaration 11 le plus proche pour analyser le bloc de détection 18.

Le lecteur 10 identifie le module de déclaration 11 le plus proche (soit directement par la réponse d'une puce RFID du module de déclaration 11, soit par consultation d'une base de données identifiant le module de déclaration 11 en fonction de la position du lecteur 10). Le module de déclaration 11 peut renvoyer des informations relatives aux modules de détection 12 et 13 qui lui sont associés, par exemple le nombre de modules de détection qui lui sont associés, leur type, leur identifiant s'ils disposent d'une puce RFID, ou leur ordre dans une répartition de fréquences d'accord.

Un module de détection, s'il dispose d'une puce RFID, peut renvoyer des informations relatives au module de déclaration auquel il est associé, le numéro d'identification du module de déclaration par exemple, et des informations le concernant. Lorsque chacun des modules de détection 12 inclut une puce RFID, le lecteur 10 peut faire un inventaire des puces RFID répondant pour déterminer l'état de chacun de ces modules de détection 12, en comparant à l'inventaire des puces RFID déclarées par le module de déclaration 11. Toutes les puces RFID identifiées en réponse sont considérées comme en mode de fonctionnement nominal. Par contre, si le module de déclaration 11 liste un module de détection 12 dont la puce RFID ne répond pas, on peut considérer que ce module de détection 12 a détecté une variation d'un paramètre d'environnement et est en mode de fonctionnement dégradé.

Lorsque les modules de détection 12 n'incluent pas de puce RFID, le lecteur 10 peut faire une analyse de réponse en fréquence sur une plage prédéfinie de fréquence, par exemple quelques MHz pour une fréquence centrale de 13,56MHz). Le niveau de champ électromagnétique produit par le lecteur 10 dans la zone d'investigation peut être changé par un changement de la puissance délivrée à l'antenne du lecteur 10, dans une plage donnée, par exemple en passant de 1W à 5W. Le niveau de champ électromagnétique produit dans la zone d'investigation peut aussi être changé par une variation de la distance entre l'antenne du lecteur 10 et la zone d'investigation. Ce paramètre de niveau de champ peut être utilisé dans l'analyse du bloc de détection 18. Il est ainsi possible de nuancer la liste des puces RFID identifiées par inventaire. Ceci peut être un moyen pour révéler des états intermédiaires d'un module de détection dans sa transition entre son premier mode et son second mode de fonctionnement. L'interprétation de la réponse en fréquence permet de décider si le résonateur de chacun des modules de détection 12 est dégradé ou non.

On a décrit ici un système de détection 1 constitué d'un bloc de détection 18 comprenant deux modules de détection 12 et 13. On notera que l'invention n'est nullement limitée à ce cas particulier et pourrait également être mise en œuvre avec un bloc de détection comprenant un unique module de détection ou plus de deux modules de détection.

Bien que l'invention ait été décrite dans le cas où le module de détection est adapté à la détection d'eau salée, elle pourrait aussi être mise en œuvre avec une deuxième module de détection adapté à la détection d'eau douce. Ainsi, il est possible de distinguer le cas où l'espace annulaire est rempli d'eau douce du cas où il est rempli d'eau salée.

## Revendications

1. [Conduite flexible de transport de fluide (90), **caractérisé en ce qu'**elle comprend un système de détection de l'évolution d'un paramètre environnemental (1), comprenant :
- au moins un module de détection (12) incluant un circuit résonant LC sensible à une évolution dudit paramètre environnemental, configuré pour fonctionner, en fonction de la valeur dudit paramètre environnemental, soit dans un premier mode dans lequel ledit circuit résonant présente une fréquence de résonance comprise dans une plage prédéfinie pour laquelle le module de détection est détectable par couplage magnétique par excitation dans ladite plage, soit dans un deuxième mode dans lequel ledit circuit résonant présente une fréquence de résonance hors de ladite plage ou une absence de fréquence de résonance ;
- un module de déclaration (11) disposé à proximité dudit module de détection (12), configuré pour communiquer sans contact en champ proche même en cas de variation de la valeur dudit paramètre environnemental, et configuré pour déclarer la présence du module de détection ;
**caractérisée en ce que** le circuit résonant LC du module de détection (12) comporte un élément électrique (125) en contact avec un fluide environnant et susceptible de voir ses propriétés électriques modifiées en fonction de la valeur du paramètre environnemental dans le fluide avec lequel il est en contact.

2. Conduite flexible de transport de fluide (90) selon la revendication 1, dans laquelle le module de déclaration (11) est recouvert d'un élément de protection (191) ne recouvrant pas ledit élément électrique (125) du circuit résonant LC du module de détection (12).

3. Conduite flexible de transport de fluide (90) selon la revendication 1 ou 2, dans laquelle l'élément électrique est un condensateur (125) dont des parties conductrices ou diélectriques sont susceptibles d'être altérées par variation de la valeur du paramètre environnemental.

4. Conduite flexible de transport de fluide (90) selon la revendication 3, dans laquelle ledit condensateur (125) comporte des pistes conductrices interdigitées.

5. Conduite flexible de transport de fluide (90) selon l'une quelconque des revendications précédentes, dans laquelle le module de détection (12) inclut une puce d'identification radiofréquence (121) connectée au circuit résonant LC.

6. Conduite flexible de transport de fluide (90) selon l'une quelconque des revendications précédentes, dans laquelle ledit module de déclaration (11) inclut un circuit résonant LC incluant un circuit d'antenne (110) de communication sans contact.

7. Conduite flexible de transport de fluide (90) selon la revendication 6, dans laquelle ledit circuit résonant LC du module de détection (12) inclut un circuit d'antenne (120), ce circuit d'antenne étant couplé magnétiquement au circuit d'antenne du circuit résonant du module de déclaration (11), la signature d'une réponse en fréquence du circuit d'antenne du module de déclaration (11) étant différente en fonction du premier ou du deuxième mode du circuit résonant du module de détection (12).

8. Conduite flexible (90) selon l'une quelconque des revendications précédentes, dans laquelle ledit module de détection et ledit module de déclaration sont fixés dans l'épaisseur de la conduite à proximité de sa surface externe.

9. Conduite flexible selon l'une quelconque des revendications précédentes, dans laquelle ledit circuit résonant LC est configuré pour être sensible à la présence d'eau salée à son contact.

10. Conduite flexible selon l'une quelconque des revendications précédentes, dans laquelle la conduite flexible comporte, de l'intérieur vers l'extérieur, une gaine interne d'étanchéité, une nappe d'armures de traction et une gaine externe, et ledit module de détection et ledit module de déclaration sont fixés entre ladite nappe d'armures de traction et ladite gaine externe.

11. Conduite flexible de transport de fluide (90) selon la revendication 6, dans laquelle ledit module de déclaration (11) inclut une puce d'identification radiofréquence (111) connectée au circuit résonant LC.

12. Conduite flexible de transport de fluide (90) selon les revendications 5 et 11, dans laquelle la puce d'identification radiofréquence (111) du module de déclaration (11) mémorise un identifiant du module de détection (12).

13. Système incluant :
- une conduite flexible de transport de fluide (90) selon la revendication 12 ;
- un lecteur (10) sans contact en champ proche, configuré pour récupérer l'identifiant du module de détection (12) mémorisé dans le module de déclaration (11), configuré pour requérir la fourniture de son identifiant par le module de détection (12), et configuré pour déterminer si le module de détection (12) est dans son premier mode ou dans son deuxième mode en fonction d'une réponse ou d'une absence de réponse du module de détection (12).

14. Système selon la revendication 13, dans lequel le lecteur (10) sans contact requiert la fourniture de l'identifiant dudit module de détection (12), suivant plusieurs niveaux de champ appliqué.

15. Système incluant :
- une conduite flexible selon l'une quelconque des revendications 1 à 12, dans laquelle ledit système de détection inclut un dispositif de lecture (10) configuré pour se déplacer le long d'une face de la conduite flexible (90) et configuré pour communiquer avec le module de déclaration.

## Patentansprüche

1. Flexible Fluidtransportleitung (90), **dadurch gekennzeichnet, dass** sie ein System zur Erfassung der Veränderung eines Umgebungsparameters (1) umfasst, umfassend:
- wenigstens ein Erfassungsmodul (12), das einen LC-Schwingkreis enthält, der für eine Veränderung des Umgebungsparameters empfindlich ist, das dazu ausgebildet ist, in Abhängigkeit von dem Wert des Umgebungsparameters entweder in einem ersten Modus, in welchem der Schwingkreis eine Resonanzfrequenz in einem vorgegebenen Bereich aufweist, für welche das Erfassungsmodul durch magnetische Kopplung durch Anregung in dem Bereich erfassbar ist, oder in einem zweiten Modus zu arbeiten, in welchem der Schwingkreis eine Resonanzfrequenz außerhalb des Bereichs oder keine Resonanzfrequenz aufweist;
- ein Meldemodul (11), das in der Nähe des Erfassungsmoduls (12) angeordnet ist, das für kontaktlose Nahfeldkommunikation ausgebildet ist, selbst im Falle einer Änderung des Werts des Umgebungsparameters, und dazu ausgebildet ist, das Vorhandensein des Erfassungsmoduls zu melden;
**dadurch gekennzeichnet, dass** der LC-Schwingkreis des Erfassungsmoduls (12) ein elektrisches Element (125) aufweist, das mit einem Umgebungsfluid in Kontakt steht und dessen elektrische Eigenschaften in Abhängigkeit von dem Wert des Umgebungsparameters in dem Fluid, mit dem es in Kontakt steht, verändert werden können.

2. Flexible Fluidtransportleitung (90) nach Anspruch 1, wobei das Meldemodul (11) von einem Schutzelement (191) bedeckt ist, das nicht das elektrische Element (125) des LC-Schwingkreises des Erfassungsmoduls (12) bedeckt.

3. Flexible Fluidtransportleitung (90) nach Anspruch 1 oder 2, wobei das elektrische Element ein Kondensator (125) ist, dessen leitende oder dielektrische Abschnitte durch Änderung des Werts des Umgebungsparameters verändert werden können.

4. Flexible Fluidtransportleitung (90) nach Anspruch 3, wobei der Kondensator (125) ineinandergreifende Leiterbahnen aufweist.

5. Flexible Fluidtransportleitung (90) nach einem der vorhergehenden Ansprüche, wobei das Erfassungsmodul (12) einen Radiofrequenz-Identifikationschip (121) enthält, der mit dem LC-Schwingkreis verbunden ist.

6. Flexible Fluidtransportleitung (90) nach einem der vorhergehenden Ansprüche, wobei das Meldemodul (11) einen LC-Schwingkreis enthält, der eine Antennenschaltung (110) für kontaktlose Kommunikation enthält.

7. Flexible Fluidtransportleitung (90) nach Anspruch 6, wobei der LC-Schwingkreis des Erfassungsmoduls (12) eine Antennenschaltung (120) enthält, wobei diese Antennenschaltung magnetisch mit der Antennenschaltung des Schwingkreises des Meldemoduls (11) gekoppelt ist, wobei die Signatur einer Frequenzantwort der Antennenschaltung des Meldemoduls (11) in Abhängigkeit vom ersten oder zweiten Modus des Schwingkreises des Erfassungsmoduls (12) verschieden ist.

8. Flexible Fluidtransportleitung (90) nach einem der vorhergehenden Ansprüche, wobei das Erfassungsmodul und das Meldemodul in der Dicke der Leitung in der Nähe von deren Außenfläche befestigt sind.

9. Flexible Fluidtransportleitung nach einem der vorhergehenden Ansprüche, wobei der LC-Schwingkreis dazu ausgebildet ist, für das Vorhandensein von Salzwasser bei Kontakt damit empfindlich zu sein.

10. Flexible Fluidtransportleitung nach einem der vorhergehenden Ansprüche, wobei die flexible Leitung von innen nach außen eine innere Dichtungshülle, eine Lage aus Zugbewehrungen und eine Außenhülle aufweist, und das Erfassungsmodul und das Meldemodul zwischen der Lage aus Zugbewehrungen und der Außenhülle befestigt sind.

11. Flexible Fluidtransportleitung (90) nach Anspruch 6, wobei das Meldemodul (11) einen Radiofrequenz-Identifikationschip (111) enthält, der mit dem LC-Schwingkreis verbunden ist.

12. Flexible Fluidtransportleitung (90) nach den Ansprüchen 5 und 11, wobei der Radiofrequenz-Identifikationschip (111) des Meldemoduls (11) eine Kennung des Erfassungsmoduls (12) speichert.

13. System enthaltend:
- eine flexible Fluidtransportleitung (90) nach Anspruch 12;
- ein kontaktloses Nahfeld-Lesegerät (10), das dazu ausgebildet ist, die Kennung des Erfassungsmoduls (12) abzurufen, die im Meldemodul (11) gespeichert ist, das dazu ausgebildet ist, die Bereitstellung von dessen Kennung durch das Erfassungsmodul (12) anzufordern, und dazu ausgebildet ist, zu bestimmen, ob sich das Erfassungsmodul (12) in seinem ersten Modus oder seinem zweiten Modus befindet, in Abhängigkeit von einer Antwort oder einem Fehlen einer Antwort des Erfassungsmoduls (12).

14. System nach Anspruch 13, wobei das kontaktlose Lesegerät (10) die Bereitstellung der Kennung des Erfassungsmoduls (12) gemäß mehreren angelegten Feldstärken anfordert.

15. System enthaltend:
- eine flexible Leitung nach einem der Ansprüche 1 bis 12, wobei das Erfassungssystem eine Lesevorrichtung (10) enthält, die dazu ausgebildet ist, sich entlang einer Fläche der flexiblen Leitung (90) zu bewegen und dazu ausgebildet ist, mit dem Meldemodul zu kommunizieren.

## Claims

1. Flexible fluid transportation pipeline (90), **characterized in that** it comprises a system for detecting changing of an environmental parameter (1), comprising:
- at least one detection module (12) including an LC resonant circuit sensitive to a change of said environmental parameter, configured to operate, as a function of the value of said environmental parameter, either in a first mode in which said resonant circuit exhibits a resonance frequency lying within a predefined range for which the detection module can be detected by magnetic coupling by excitation in said range, or in a second mode in which said resonant circuit exhibits a resonance frequency outside of said range or an absence of resonance frequency;
- a declaration module (11) disposed in proximity to said detection module (12), configured to communicate contactlessly in near-field mode even in the case of variation of the value of said environmental parameter, and configured to declare the presence of the detection module;
**characterized in that** the LC resonant circuit of the detection module (12) comprises an electrical element (125) in contact with a surrounding fluid and likely to have its electrical properties modified as a function of the value of the environmental parameter in the fluid with which it is in contact.

2. Flexible fluid transportation pipeline (90) according to Claim 1, wherein the declaration module (11) is covered by a protection element (191) that does not cover said electrical element (125) of the LC resonant circuit of the detection module (12).

3. Flexible fluid transportation pipeline (90) according to Claim 1 or 2, wherein the electrical element is a capacitor (125) of which conductive or dielectrical parts are likely to be altered by variation of the value of the environmental parameter.

4. Flexible fluid transportation pipeline (90) according to Claim 3, wherein said capacitor (125) comprises interdigital conductive tracks.

5. Flexible fluid transportation pipeline (90) according to any one of the preceding claims, wherein the detection module (12) includes a radiofrequency identification chip (121) connected to the LC resonant circuit.

6. Flexible fluid transportation pipeline (90) according to any one of the preceding claims, wherein said declaration module (11) includes an LC resonant circuit including a contactless communication antenna circuit (110).

7. Flexible fluid transportation pipeline (90) according to Claim 6, wherein said LC resonant circuit of the detection module (12) includes an antenna circuit (120), this antenna circuit being magnetically coupled to the antenna circuit of the resonant circuit of the declaration module (11), the signature of a frequency response of the antenna circuit of the declaration module (11) being different as a function of the first or second mode of the resonant circuit of the detection module (12).

8. Flexible pipeline (90) according to any one of the preceding claims, wherein said detection module and said declaration module are fixed in the thickness of the pipeline in proximity to its outer surface.

9. Flexible pipeline according to any one of the preceding claims, wherein said LC resonant circuit is configured to be sensitive to the presence of salt water at its contact.

10. Flexible pipeline according to any one of the preceding claims, wherein the flexible pipeline comprises, from the inside to the outside, an inner sealing sheath, a ply of tensile armour, and an outer sheath, and said detection module and said declaration module are fixed between said ply of tensile armour and said outer sheath.

11. Flexible fluid transportation pipeline (90) according to Claim 6, wherein said declaration module (11) includes a radiofrequency identification chip (111) connected to the LC resonant circuit.

12. Flexible fluid transportation pipeline (90) according to Claims 5 and 11, wherein the radiofrequency identification chip (111) of the declaration module (11) stores an identifier of the detection module (12).

13. System including:
- a flexible fluid transportation pipeline (90) according to Claim 12;
- a contactless near-field reader (10), configured to retrieve the identifier of the detection module (12) stored in the declaration module (11), configured to request the provision of its identifier by the detection module (12), and configured to determine if the detection module (12) is in its first mode or in its second mode as a function of a response or an absence of response from the detection module (12).

14. System according to Claim 13, wherein the contactless reader (10) requests the provision of the identifier of said detection module (12), according to several applied field levels.

15. System including:
- a flexible pipeline according to any one of Claims 1 to 12, wherein said detection system includes a reading device (10) configured to be displaced along a face of the flexible pipeline (90) and configured to communicate with the declaration module.
